# EUROPÄISCHE PATENTSCHRIFT

(11) **EP 1 036 771 B1**
(45) Veröffentlichungstag und Bekanntmachung des Hinweises auf die Patenterteilung: **31.10.2001**
(21) Anmeldenummer: 99105373.7
(22) Anmeldetag: 16.03.1999
(51) Int. Cl.: C02F 3/10, B01D 39/16, B01D 39/04, B29B 9/06

(54) **Verwendung von vorsortierten Kunststoffabfällen zum Herstellen eines Granulats als Filter für die Reinigung von Abwasser**
Use of separated plastic wastes for producing granules for waste water treatment
Utilisation de déchets plastiques séparés pour la fabrication de granules pour l'épuration des eaux usées

(43) Veröffentlichungstag der Anmeldung: 20.09.2000
(73) Patentinhaber: Brauer, Christine, 22359 Hamburg (DE)
(72) Erfinder: Brauer, Christine, 22359 Hamburg (DE)
(74) Vertreter: Eisenführ, Speiser & Partner

(56) Entgegenhaltungen:
- WO-A-94/26086
- DE-A- 19 716 213
- DE-C- 19 702 521
- US-A- 4 656 197
- DATABASE WPI Section Ch, Week 9510 Derwent Publications Ltd., London, GB; Class A17, AN 95-070402 XP002110141 & JP 06 345890 A (SEKISUI CHEM IND CO LTD) , 20. Dezember 1994 (1994-12-20)
- DATABASE WPI Section Ch, Week 8213 Derwent Publications Ltd., London, GB; Class A97, AN 82-24884E XP002110142 & JP 57 030596 A (KAYABA IND CO LTD), 18. Februar 1982 (1982-02-18)

## Beschreibung

Die Erfindung betrifft die ökologisch sinnvolle Verwendung von vorsortierten gesäuberten Kunststoffabfällen aus der sog. Flaschenfraktion des Dualen System Deutschland DER GRÜNE Punkt oder vergleichbaren Abfallsammel- und Sortierorganisationen.

In der DE 197 02 521 C wird ein Kunststoffrecyclingmaterial zur Herstellung eines Aufwuchstauchkörpers beschrieben, der für die Ansiedlung von Mikroorganismen zur Reinigung von Abwasser eingesetzt wird. Der dortige Hauptanspruch fordert zudem eine Mischeinrichtung mit Elementen zum zusätzlichen schöpfenden Herausheben eines Teiles der Aufwuchstauchkörper, die aus HDPE-REC, einem Kunststoffrecyclingmaterial /Hochdruckpolyethylen und/oder aus Xylith (Pentanpentol) bestehen, die Nitrifikanten der Aufwuchstauchkörper immobilisieren.

Die Verwendung von Kunststoffabfällen, insbesondere auch solche, die vorsortiert und/oder gereinigt sind, ist im Stand der Technik bekannt, ebenso wie verschiedene Verfahren zum Herstellen eines Granulats als Filter für die Reinigung von Abwasser. Große Anteile von Kunststoffabfällen, insbesondere auch Haushaltsverpackungen werden stofflich bekanntermaßen recycelt. Die Deutsche Gesellschaft für Kunststoffrecycling GmbH, kurz DKR genannt, hat eine entsprechende Aufsplittung dieser verschiedenen Kunststoffmaterialien vorgenommen. Es gibt eine Folienfraktion, eine Kunststofflaschenfraktion, eine EPS-Fraktion, eine Becherfraktion und eine Mischkunststofffraktion. Reste werden thermisch verwertet, z.B. durch Energiegewinnung per Verbrennung. So präsentierte das DSD schon 1997 eine Verwertungsquote von 86 %, wie es in der Zeitung "DIE WELT" vom 05.02.1999 zitiert wird. Aber auch das DSD-DKR-System präsentiert sich mehr und mehr markt- und wirtschaftsorientiert. Gibt es z.Z. noch Zuschußquoten von DM 500,00/mt für die im DSD-Bereich zertifizierten Aufbereiter, so wird sich dieses in den nächsten Jahren wohl ändern.

Anders als der normale Recyclingmarkt, der heute, am Anfang des Jahres 1999, preislich vor dem Zusammenbruch steht, ist das DSD-Material bis jetzt noch durch die gezahlten Zuschüsse soweit protegiert.

Natürlich sind große Firmengruppen mit enormem Aufwand in der Lage, die qualitativen Wünsche einiger, begrenzter Kunden u.a. auch im Ausland zu erfüllen. Trotzdem bleibt der Markt für das DSD-Material begrenzt. Grund allein sind z.B. Probleme mit der Sortenreinheit, gewisse Geruchsfragmente und die Schwierigkeit einer gleichbleibenden technischen Spezifikation.

Es besteht also Bedarf, mit möglichst wenig Aufwand, ein einfaches und ökologisch sinnvolles Produkt herzustellen, ausgehend von einem Basisrohstoff, der kontinuierlich verfügbar ist und anders wie bei Rohren oder Flaschen, welche aus dem DSD-Granulat hergestellt werden können, nur geringe Anforderungen an die Qualität stellt.

Aus der WO 94/26086 sind ferner Kunststoffgranulate bekannt, die aus polymeren Materialien hergestellt werden, welche nicht homogen durch einen Extruder extrudiert werden, und in Wasserbehandlungsanlagen zur Reinigung von Siel und Abwasser eingesetzt werden. Selbstverständlich sind die nach diesem besonderen Verfahren eingesetzten Kunststoffausgangsprodukte relativ teuer, weshalb ihr industrieller Einsatz außerhalb Großbritanniens in größerem Maßstabe bisher nicht stattgefunden hat.

Im Gegenzug zu diesen hochqualifizierten Kunststoffen versucht die Erfindung Abhilfe zu schaffen, indem sie für Kunststoffabfälle, und insbesondere solche, die aus dem dualen System Deutschland bzw. Europa stammen, einen neuen Verwendungszweck erschließt, wobei in besonders einfacher und schneller Weise ein preiswertes Endprodukt zur Verfügung gestellt wird.

Die erfindungsgemäße Verwendung ist in Anspruch 1 beschrieben.

Überraschender Weise hat sich also gezeigt, daß man tatsächlich vorsortierten Kunststoffabfall, wie er beim DSD als Abfallprodukt auftritt, nicht nur als Recyclingprodukt, sondern auch ein daraus hergestelltes Granulat als Filter zum Reinigen von Abwasser verwenden kann. Dieses ist eine besonders ökologische Verwertung, welche einen äußerst preiswerten Ausgangsstoff bietet. Bisher haben die Fachleute an ein solches im Kreislauf arbeitendes System auf Basis regelmäßig verfügbarer DSD-Granulate nicht gedacht, da scheinbar das erfindungsgemäße Prinzip "mit Abfall Abfall (Abwasser) reinigen" eine erhebliche Hemmschwelle beinhaltet.

Dabei ist in verfahrensgemäßer Hinsicht vorgesehen, daß im Schneckenextruder dem DSD-Basisprodukt eine geringe Menge an Peroxid zur Vernetzung hinzugefügt wird, so daß ein homogenes Endprodukt entsteht. Die degressive Temperaturführung sorgt für eine beständige, möglichst große Oberfläche des Granulats, welche eine Ansiedlung von Mikroorganismen ermöglicht. Vorteilhafterweise werden hierzu nur ca. 10 bis 20 und insbesondere 15 Gew.-% des DSD-Kunststoffabfallmaterials mit dem Peroxidadditiv, z.B. Dicumylperoxid 40%ig in PE, oder peroxidhaltigen Abfällen, insbesondere gehäckselte oder gemahlene Fußbodenheizungsrohre, vermischt, um eine möglichst große Oberfläche des Granulats zu erzielen, wodurch die Ansiedlung von Mikroorganismen möglich und die Langlebigkeit des Granulats erhöht wird.

Das Peroxid hat weiter den Vorteil, daß es sich hier mit der Langlebigkeit um ein System handelt, welches nach Reinigung praktisch immer wieder verwendbar ist.

Im folgenden wird ein bevorzugtes Beispiel der erfindungsgemäßen Verfahrensweise näher erläutert:
- Mischung im Mischsilo vorbereiten
   ca. 85 Gew% DSD Material gesäubertes und getrocknetes Flaschenmahlgut
   ca. 15 Gew% PE Compound (enthält ca. 2% Peroxid)

Alternativ:
ca. 15 Gew% PE Mahlgut aus Fußbodenheizungsrohren (Vermerk: bei Kaskadenextrudern ist keine 15 Gew% Zumischung notwendig)/(unter Kaskadenextrudern versteht man zwei miteinander verbundene Extruder).
- Aufheizen des Extruders
- Anfahren des Extruders mit Justierung der Heizzonen (degressiv von 270°C / Schmelzen des eingegebenen Flaschen-Mahlgutes - 200°C fallend) sowie der Schneidwerkzeuge zur Regulierung der Granulatgröße;
- Entgasung anstellen (bei Kaskadenextrudern eventuell doppelte Entgasung notwendig);
- Zugabe von 1% schwarzem Masterbatch (d.h. einen Farbzusatz über die Dosieranlage, Farbe ist eigentlich nicht notwendig, verbessert aber Optik/Eindruck;
- Einstellen der Schneckendrehzahl, individuell je nach Extrudertype meist bei 300 U/min.;
- entsprechend wird ein Massedruck von ca. 130 kg/cm² erreicht;
- Extrudieren der Mischung über den Extruder über ein 400 µ Sieb;
- Extrudieren durch eine 2,5 mm Lochplatte. Andere Größen sind für den Fachmann denkbar.
- Abkühlung der Granulate über einem Wasserbad;
- Schneiden und Absieben der Über- und Untergrößen der Granulate;
- Absaugen in ein Lagersilo;
- Abfüllen vom Lagersilo in z.B. Beutel von 1200 Kg;
- Abstellen des Beutels auf eine Holzpalette.

Die Flaschenfraktion des DSD wurde anhand von verschiedenen Proben untersucht, deren Ergebnisse nachfolgend dargestellt werden:

| **Kunststoffflaschen** | | |
|---|---|---|
| **Spezifikation** | **Reinheit** | **Störstoffe** |
| Flaschen ≤ 5 Liter Volumeninhalt (z.B.Shampooflaschen, Waschmittelflaschen, Haushaltsreiniger) | min. 94% lt. Spezifikation | - Metall |
| | max. 3 % Störstoffe | - Glas |
| | max. 3 & andere Kunststoffverpakkungen | - Papier |
| | | - Fremdmaterialien wie: Gummi, Textilien, Holz, Steine |
| | | - Verbundmaterialien wie: Kunststoff-Aluminium, Getränkekartons usw.) |
| | | - Nichtverpackungen aus Kunststoff (Sondervereinbarungen bleiben vorbehalten) |

| 1. Muster - Regranulat aus DSD-Flaschenfraktion (grüngraues Granulat) | | | |
|---|---|---|---|
| **Analysenwerte** | **Prüfung auf** | **Prüfverfahren** | **Prüfergebnis** |
| | PVC | RFA | < 0,05 % |
| | | | |
| | Polyamide | Ameisensäureextrakt/IR | nicht nachweisbar |
| | | | |
| | Polystyrol, ABS, Polycarbonat, Weichmacher, Wachse, etc. | Chloroformextrakt/IR | 1,44 % |
| | | | |
| | Füllstoffe, Glasfasern, anorganische Begleitstoffe | Glührückstand bei 550 °C (DIN 53 568) | 0,92 % |
| **Bemerkungen** | Der Chloroformextrakt besteht überwiegend aus einem aliphatischen Karbonsäureester. Thermoplastische Verunreinigungen, wie Polystyrol, ABS, Polycarbonat, etc. konnten nicht nachgewiesen werden. | | |
| | | | |
| | Der **Extraktionsrückstand** besteht aus einem Gemisch aus Polyethylen (Hauptkomponente) und deutlichen Mengen Polypropylen. Verunreinigungen sind IR-spektrometrisch nicht nachweisbar. | | |
| | | | |
| **Zusammenfassung** | Nach Berücksichtigung der unter 5. bestimmten Verunreinigungen ergibt sich ein **Gehalt an Polyolefinen (PE/PP) in Muster A von ≥ 97 %.** | | |

| 2. Muster - Mahlgut aus DSD-Flaschenfaraktion eines weiteren Herstellers | | | |
|---|---|---|---|
| **Analysenwerte** | **Prüfung auf** | **Prüfverfahren** | **Prüfergebnis** |
| | PVC | RFA | < 0.05 % |
| | | | |
| | Polyamide | Ameisensäureextrakt/IR | nicht nachweisbar |
| | | | |
| | Polystyrol, ABS, Polycarbonat, Weichmacher, Wachse, etc. | Chloroformextrakt/IR | 1,14 % |
| | | | |
| | Füllstoffe, Glasfasern, anorganische Begleitstoffe | Glührückstand bei 550 °C (DIN 53 568) | 1,03 % |
| **Bemerkungen** | Der Chloroformextrakt besteht überwiegend aus einem aliphatischen Karbonsäureester. Thermoplastische Verunreinigungen, wie Polystyrol, ABS, Polycarbonat, etc. konnten nicht nachgewiesen werden. | | |
| | | | |
| | Der **Extraktionsrückstand** besteht aus einem Gemisch aus Polyethylen (Hauptkomponente) und deutlichen Mengen Polypropylen. Verunreinigungen sind IR-spektrometrisch nicht nachweisbar. | | |
| | | | |
| **Zusammenfassung** | Nach Berücksichtigung der unter 5. bestimmten Verunreinigungen ergibt sich ein **Gehalt an Polyolefinen (PE/PP) in Muster A von ≥ 97 %.** | | |

Das erfindungsgemäße Verfahren zeigt also, daß nicht für jeden Einsatz, und gerade nicht für den als Filter, der eingesetzte Kunststoff steril und neu sein muß, vielmehr lassen sich die beschriebenen und beanspruchten Produkte hierzu einsetzen.

## Patentansprüche

1. Verfahren zur Herstellung eines aus Kunststoffabfällen gebildeten Granulats, das als Filter für die Reinigung von Abwässern geeignet ist, wobei als Ausgangsmaterial insbesondere vorsortierte, gesäuberte Kunststoffabfälle aus der sog. Flaschenfraktion des deutschen dualen Systems Der Grüne Punkt oder vergleichbaren Abfallsammel- und Sortierorganisationen eingesetzt werden, wobei die Kunststoffabfälle weitestgehend aus Polyethylen und Polypropylen bestehen, wobei die Kunststoffabfälle bis zum geschmolzenen Zustand erwärmt und durch einen Schneckenextruder extrudiert werden, während die Temperatur im Extruder degressiv eingestellt wird, nämlich am Einlass im Bereich von 250 bis 300° C, am Extruderkopf 180 bis 200° C, und dass 0,1 bis 0,5 GeW.-% Peroxid oder peroxidhaltige Abfälle am Extruderkopf zugegeben werden.

2. Verfahren nach Anspruch 1
**dadurch gekennzeichnet, dass** lediglich 10 bis 20 Gewichtsprozente des Kunststoffabfalls mit 1 bis 2 Gewichtsprozenten Peroxid versetzt und dann mit 80 bis 90 Gewichtsprozenten des Ausgangsmaterials an Kunststoffabfall homogenisiert werden.

3. Verfahren nach Anspruch 2,
**dadurch gekennzeichnet, dass** 15 Gewichtsprozente des Kunststoffabfalls mit 1 bis 3 Gewichtsprozenten des Peroxid versetzt und 85 Gewichtsprozenten des Ausgangsmaterials an Kunststoffabfall versetzt und homogenisiert werden.

4. Verwendung eines Granulats, hergestellt nach einem der vorhergehenden Ansprüche 1 bis 3, als Filter zum Reinigen von Abwasser.

## Claims

1. The use of pre-sorted, cleaned plastics waste materials from the so-called bottle fraction of the Duales System Deutschland der Grüne Punkt [German Dual System, Green Dot] or comparable waste, collecting and sorting organisations, in which the plastics waste materials comprise for the most part polyethylene and polyprophelene for producing a granulate which is suitable as a filter for treating effluent.

2. A process for producing a granulate which is formed in a plastics filling machine and is suitable as a filter for treating effluents, in which pre-sorted, cleaned plastics waste materials from the so-called bottle fraction of the Duales System Deutschland der Grüne Punkt or comparable waste-collecting and sorting organisations are used as the starting material, the plastics waste materials comprising for the most part polyethylene and polyprophelene, the plastics waste materials being heated to a molten state and extruded through a screw-type extruder whilst the temperature in the extruder is set in decreasing manner, namely in the range between 250 and 300 degrees Celsius at the inlet and 180 and 200 degrees Celsius at the extruder head, and to which 0.1 to 0.5 percent by weight of peroxide or peroxide-containing waste materials are added at the extruder head.

3. A process according to Claim 2, **characterised in that** merely 10 to 20 percent by weight of the plastics waste is mixed with 1 to 3 percent by weight of peroxide and is then homogenised with 80 to 90 percent by weight of the plastics-waste starting material.

4. A process according to Claim 3, **characterised in that** 15 percent by weight of the plastics waste is mixed with 1 to 3 percent by weight of peroxide, and mixed and homogenised with 85 percent by weight of the plastics-waste starting material.

## Revendications

1. Utilisation de déchets plastiques nettoyés, préalablement triés, de la section bouteilles du « Dualen Systems Deutschland der Grüne Punkt » (système dual allemand du point vert") ou d'organisations similaires de collecte et de tri des déchets, où les déchets plastiques se composent essentiellement de polyéthylène et de polypropylène, pour préparer un granulé qui est approprié comme filtre pour l'épuration des eaux usées.

2. Procédé de préparation d'un granulé formé de déchets plastiques, qui est approprié comme filtre pour l'épuration des eaux usées, où comme matériau de départ, on utilise des déchets plastiques nettoyés, préalablement triés, de la section bouteilles du « Dualen Systems Deutschland der Grüne Punkt » ou d'organisations similaires de collecte et de tri des déchets, où les déchets plastiques se composent essentiellement de polyéthylène et de polypropylène, dans lequel les déchets plastiques sont chauffés jusqu'à l'état fondu et extrudés par une extrudeuse à vis alors que la température est réglée de manière dégressive dans l'extrudeuse, à savoir à l'entrée dans l'intervalle allant de 250 à 300°C et à la tête de l'extrudeuse, de 180 à 200°C, et que l'on ajoute 0,1 à 0,5% en poids de peroxyde ou de déchets contenant un peroxyde à la tête de l'extrudeuse.

3. Procédé selon la revendication 2, **caractérisé en ce que** l'on ajoute à seulement 10 à 20% en poids des déchets plastiques, 1 à 3% en poids de peroxyde et **en ce qu'**on homogénéise ensuite avec 80 à 90% en poids du matériau de départ de déchets plastiques.

4. Procédé selon la revendication 3, **caractérisé en ce que** l'on ajoute à 15% en poids de déchets plastiques, 1 à 3% en poids de peroxyde et **en ce que** l'on additionne et homogénéise 85% en poids du matériau de départ de déchets plastiques.
